# EUROPÄISCHE PATENTANMELDUNG

(11) **EP 0 834 977 A2**
(43) Veröffentlichungstag der Anmeldung: **08.04.1998**
(21) Anmeldenummer: 97810450.3
(22) Anmeldetag: 08.07.1997
(51) Int. Cl.: H02J 7/02

(54) **Einrichtung zum Laden mindestens eines Akkumulators, insbesondere eines Akkumulators für ein elektrisch angetriebenes Fahrzeug sowie ein Verfahren zum Betrieb dieser Einrichtung**

(30) Priorität: 08.08.1996 CH 1942/96
(71) Anmelder: Schmidhauser AG, 9315 Neukirch-Egnach (CH)
(72) Erfinder: Itten, Alexander, 8580 Amriswil (CH)
(74) Vertreter: Kulhavy, Sava, Dipl.-Ing.

(57) **Zusammenfassung**

Die Einrichtung umfasst mindestens einen Akkumulator (1), einen Drehstrommotor (3) sowie einen durch eine Steuereinheit (5) steuerbaren Pulswechselrichter (2), welcher zwischen dem Akkumulator (1) und dem Drehstrommotor (3) geschaltet ist. Der Drehstrommotor (3) hat in Stern geschaltete Wicklungen. Eine der Ausgangsklemmen (A3) eines Brückengleichrichters (4) ist an den Sternpunkt (34) des Drehstrommotors (3) angeschlossen. Der andere Ausgangspunkt (A4) des Brückengleichrichters (4) ist an einen der Pole (P2) des Akkumulators (1) angeschlossen. Die Steuereinheit (5) ist zur Regelung des Ladestromes für den Akkumulator (1) ausgeführt und geschaltet.

## Beschreibung

Die vorliegende Erfindung betrifft eine Einrichtung zum Laden mindestens eines Akkumulators, insbesondere eines Akkumulators für ein elektrisch angetriebenes Fahrzeug, mit einem Antriebsmotor sowie mit einem durch eine Steuervorichtung steuerbaren Pulswechselrichter, welcher zwischen dem Akkumulator und dem Antriebsmotor geschaltet ist, sowie ein Verfahren zum Betrieb dieser Einrichtung.

Eine Einrichtung dieser Gattung ist bereits bekannt und sie ist in WO 93/01650 offenbart. Der Drehstromantrieb dieser vorbekannten Einrichtung enthält einen Drehstrommotor und einen Wechselrichter. Die Wechselstromanschlüsse des Wechselrichters sind über Schütze mit dem Drehstrommotor verbindbar. Ein dritter Wechselstromanschluss des Wechselrichers und ein Gleichstromanschluss des Wechselrichters sind über weitere Schütze mit den Anschlüssen der Fahrbatterie verbindbar.

Der Wechselrichter wird bei dieser vorbekannten Schaltungsanordnung als Hoch-Tiefsetzer eingesetzt, damit eine tiefere Batteriespannung und somit auch weniger in Serie geschaltete Zellen eingesetzt werden können. Als besonders nachteilig gilt bei dieser vorbekannten Schaltungsanordnung, dass die Batterie und der Motor beim Wechsel zwischen dem Fahren und dem Laden an einer anderen Stelle des Wechselrichters angeschlossen werden müssen. Dazu werden Leistungsschütze verwendet, die nicht nur die Kosten erhöhen, sondern auch Probleme bei de Entstörung (EMV) der Einrichtung bereiten. Gleichzeitig werden die Leistungshalbleiter im Wechselrichter nicht in ihrem optimalen Betriebsbereich eingesetzt, sodass auch dadurch sich die Kosten dieser vorbekanten Einrichtung erhöhen.

Die Aufgabe der vorliegenden Erfindung ist, diese sowie noch weitere Nachteile dieser vorbekannten Einrichtung zu beheben.

Die genannte Aufgabe wird bei der Einrichtung der eingangs genannten Gattung erfindungsgemüss so gelöst, wie dies im kennzeichnenden Teil des Patentanspruchs 1 definiert ist. Die genannte Aufgabe wird auch durch Verfahren gelöst, welche im kennzeichnenden Teil der Patentansprüche 14 und 21 definiert sind.

Nachstehend werden Ausführungsformen der vorliegenden Erfindung anhand der beiliegenden Zeichnungen näher erläutert. Es zeigt:
Fig. 1 eine erste Ausführungsform der vorliegenden Einrichtung zum Laden mindestens eines Akkumulators,

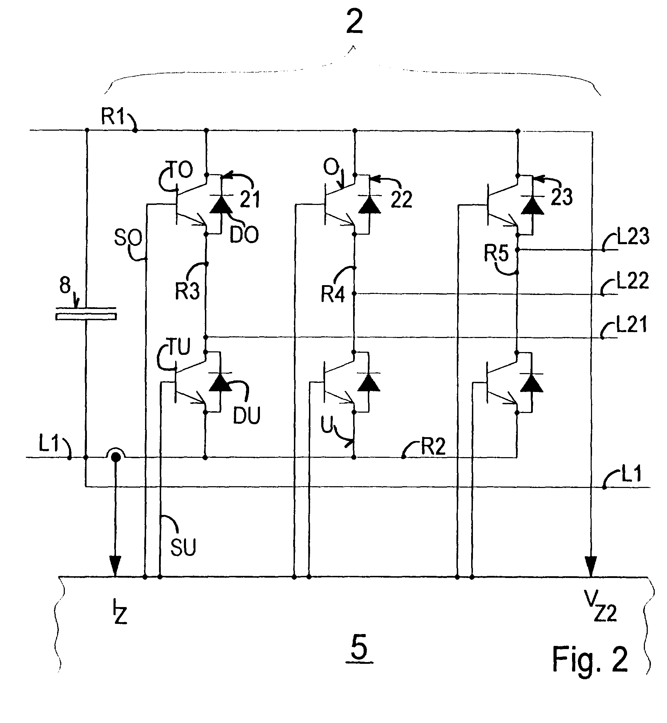

Fig. 2 vergrössert einen Ausschnitt aus Fig. 1,
Fig. 3 einen Abschnitt der vorliegenden Einrichtung, welcher zum Laden mehrerer Akkumulatoren ausgebildet ist, und
Fig. 4 ein Diagramm, welches den Verlauf von Spannung und Strom während des Ladens eines oder mehrerer Akkumulatoren veranschaulicht.

Die vorliegende Einrichtung umfasst einen Akkumulator 1, einen Pulswechselrichter 2, einen Antriebsmotor 3, einen Brückengleichrichter 4 und eine Steuervorrichtung 5.

Der Akkumulator 1 weist eine so grosse Anzahl von in Serie geschalteten Zellen auf, dass die Nennspannung des Akkumulators 1 über dem Scheitelwert der Spannung im Stromversorgungsnetz 10 liegt.

Der Pulswechselrichter 2 weist drei praktisch gleich ausgeführte Brückenzweige 21, 22 und 23 auf und er ist zwischen dem Akkumulator 1 und dem Antriebsmotor 3 geschaltet.

Der Antriebsmotor 3 ist ein Drehstrommotor, welcher während der Fahrt des Fahrzeuges aus dem Akkumulator 1 über den Pulswechselrichter 2 mit Energie gespeist wird. Die Statortwicklungen 31, 32 und 33 des Antriebsmotors 3 sind in Stern geschaltet, sodass dieser Motor 3 einen Sternpunkt 34 aufweist. Während der Ladung des Akkumulators, wenn das Fahrzeug ausser Betrieb ist, dienen die Statorwicklungen 31 bis 33 als Drosseln.

Der Brückengleichrichter 4 ist ein an sich bekannter Brückengleichrichter, welcher 2- oder 3-phasig an das Stromversorgungsnetz 10 angeschlossen sein kann.

Die Steuervorichtung 5 ist so ausgeführt und an den Pulswechselrichter 2 sowie an den Motor 3 angeschlossen, dass sie die Betriebsart der Einrichtung bestimmen kann. Die durch die Steuervorrichtung 5 abgegebenen Signale veranlassen die erforderliche Umwandlung der Gleichspannung aus dem Akkumulator 1 in eine für den Antriebsmotor 3 erforderliche Wechselspannung der gewünschten Frequenz. Damit kann das Fahrzeug gesteuert werden. Die Steuervorrichtung 5 enthält einen Computer, in welchem betreffende Programme abgearbeitet werden können.

Einer der Pole P1 des Akkumulators 1 ist über einen Vorladekreis 6 an einen Leiter R1 angeschlossen, welcher die ersten bzw. oberen Enden der Brückenzweige 21 bis 23 des Pulswechselrichters 2 untereinander verbindet. Dieser Verbindungsleiter R1 ist ferner an einen der Eingänge der Steuervorrichtung 5 angeschlossen. Der Vorladekreis 6 umfasst ein Relais 61 sowie einen parallel zu den feststehenden Kontaktstücken des Vorladerelais 61 geschalteten Vorladewiderstand 62. Eines der Kontaktstücke ist an den ersten Pol P1 des Akkumulators 1 angeschlossen. Das andere Kontaktstück ist mit dem ersten Verbindungsleiter R1 verbunden. Der Kontaktarm des Relais 61 ist von der Steuervorrichtung 5 aus über eine Steuerleitung S1 betätigbar.

Der andere Pol P2 des Akkumulators 1 ist an einen gemeinsamen Leiter L1 der vorliegenden Einrichtung angeschlossen, an welchen auch ein zweiter Verbindungsleiter R2 angeschlossen ist, welcher die zweiten bzw. unteren Enden der Brückenzweige 21 bis 23 des Pulswechselrichters 2 untereinander verbindet. Ein Zwischenkreiskondensator 8 ist zwischen den Verbindungsleitern R1 und R2 und parallel zum Pulswechselrichter 2 geschaltet.

Der jeweilige Brückenzweig 21, 22 bzw. 23 des Pulswechselrichters 2 umfasst zwei Schalter O und U, welche über einen Verbindungsleiter R3, R4 bzw. R5 in Serie geschaltet sind. Jeder dieser Schalter O bzw. U enthält einen Transistor TO bzw. TU oder ein ähnliches Schaltelement und eine Diode DO bzw. DU. Im dargestellten Fall handelt es sich um einen n-p-n-Transistor. Die Diode DO bzw. DU ist dem Transistor TO bzw. TU so zugeordnet, dass ihre Kathode mit dem Kollektor und ihre Anode mit dem Emitter des Transistors TO bzw. TU verbunden ist. Die zwei Schalter O und U sind sich im jeweiligen Brückenzweig 21, 22 bzw. 23 so zugeordnet, dass der Emitter des Transistors TO im oberen Schalters O mit dem Kollektor des Transistors TU im untereren Schalter U über den Verbindungsleiter R3, R4 bzw. R5 verbunden ist. Der Kollektor des Transistors TO im oberen Schalter O ist an den ersten Verbindungsleiter R1 angeschlossen. Der Emitter des Transistors TU im unteren Schalter U ist mit dem zweiten Verbindungsleiter R2 verbunden. Die Base des jeweiligen Transistors TO bzw. TU ist über eine Steuerleitung SO bzw. SU an die Steuervorrichtung 5 angeschlossen.

Als Schaltmittel TO bzw. TU können MOS-FET- oder IGB-Transistoren oder andere abschaltbare Halbleiterelemente verwendet werden.

Der jeweilige Verbindungsleiter R3, R4 bzw. R5 zwischen den Schaltern O und U der Brückenzweige 21, 22 bzw. 23 ist mit Hilfe je eines Leiters L21, L22 bzw. L23 mit dem Anfang V1, U1, W1 jeweils einer der Statorwicklungen 31, 32 bzw. 33 des Antriebsmotors 3 verbunden. Die Enden U2, V2 und W2 der Statorwicklungen 31 bis 33 im Motor 3 sind mit dem bereits erwähnten gemeinsamen Sternpunkt 34 verbunden.

Einer der Ausgangsleiter bzw. eine der Ausgangsklemmen A3 des Brückengleichrichters 4 ist an den Sternpunkt 34 des Antriebsmotors 3 angeschlossen. Der andere Ausgangsleiter bzw. die andere Ausgangsklemme A4 des Brückengleichrichters 4 ist an den gemeinsamen Leiter L1 und somit auch direkt an den zweiten Pol P2 des Akkumulators 1 angeschlossen. Ueber die jeweilige Wicklung 31 bis 33 und den jeweiligen Leiter L21, L22 und L23 ist die Ausgangsklemme A3 des Brückengleichrichters 4 an die Verbindungsleiter R3, R4 bzw. R5 zwischen den Schaltern O und U im jeweiligen Brückenzweig 21, 22 bzw. 23 des Pulswechselrichters 2 angeschlossen. Die Eingangsleiter E1 und E2 des Brückengleichrichters 4 sind über ein Filter 11 mit dem Netz 10 verbunden.

Die vorliegende Erfindung geht von der Tatsache aus, dass ein elektrisch angetriebenes Fahrzeug sich während der Ladung des Akkumulators nicht im Betrieb befinden kann. Deswegen können Teile der Einrichtung, welche für den Betrieb des Fahrzeuges erforderlich sind, während der Ladung des Akkumulators als Teile des Ladegerätes dienen.

Wird die Gesamtspannung des Akkumulators 1 durch Serienschaltung genügend vieler Zellen so weit erhöht, dass dessen Nennspannung über dem Scheitelwert der Spannung im Stromversorgungsnetz 10 liegt, dann kann der Pulswechselrichter 2 zusammen mit dem Drehstrommotor 3 als Hochsteller betrieben werden und damit können diese Bestandteile der Einrichtung die Funktion des Ladegerätes übernehmen.

Durch die Ansteuerung eines oder mehrerer der unteren Schalter U des Pulswechselrichters 2 mit einem durch die Steuervorrichtung 5 erzeugten pulsweitmodulierten Signal wird ein magnetisches Feld in der bzw. in den als Speicherdrossel dienenden Statorwicklungen 31, 32 bzw. 33 des Drehstrommotors 3 aufgebaut. Nach dem Sperren des bzw. der unteren Schalter U baut sich dieses magnetische Feld über die Freilaufdioden DO in den oberen Schaltern O und über den Akkumulator 1 wieder ab. Beim Ladebeginn, wenn die Spannung des Akkumulators 1 tiefer ist als der Spitzenwert der Netzspannung, wird der Ladestrom nach Oeffnen des Vorladerelais 61 durch den Vorladewiderstand 62 begrenzt. Der Mittelwert des Ladestromes durch den Akkumulator 1 kann dann je nach verwendetem Ladeverfahren entsprechend dem Ladegrad und der Spanung des Akkumulators 1 durch die Steuervorrichtung 5 geregelt werden.

Durch Aenderung der Einschaltdauer der unteren Schalter U kann der Strom durch die Speicherdrosseln 31 bis 33 und damit auch die Spannung über dem Akkumulator 1 geregelt werden. Ein oder mehrere der unteren Schalter SU können so getaktet werden, dass der Strom durch die Speicherdrosseln 31 bis 33 die Form eines gleichgerichteten Sinussignals aufweist und dass er mit der Netzspannung in gleicher Phase liegt. Der Strom durch den Wechselrichter 2 und den Motor 3 wird somit derart gesteuert, dass dem Netz 10 ein sinusförmiger Strom mit einem kleinen Anteil an Blindleistung entzogen wird und dass gleichzeitig der Ladestrom des Akkumulators geregelt wird. Gleichzeitig ist es auch möglich, dass bei geeigneter Modulation die Oberwellen des Netzstromes reduziert werden, sodass ohne Zusatzaufwand die geltenden EMV-Vorschriften eingehalten werden können.

Durch die Verwendung bestimmter Teile des Antriebes als Ladegerät wird es ebenfalls möglich, die Ladung des Akkumulators aufgrund des beim Fahren gemessenen Verbrauches so zu optimieren, dass der Akkumulator jedesmal komplett geladen wird und dass eine Ueberladung des Akkumulators vermieden wird. Dies hilft entscheidend, die Lebensdauer des Akkumulators zu verlängern.

Zur Steuerung des Ladebetriebes wird jener Mikroprozessor in der Steuervorrichtung 5 ausgenützt, welcher beim Fahren für die Steuerung des Pulswechselrichters 2 verwendet wird. Beim Laden läuft in diesem Mikroprozessor allerdings ein anderer Teil des Programmes ab als beim Fahren. Dieser Mikroprozessor empfängt die für die Regelung des Ladevorganges massgebenden Signale, er verabeitet diese Signale und erzeugt daraus Signale zur Steuerung der Schalter O und U in den Brückenzweigen 21, 22 und 23 des Pulswechselrichters 2. Die dabei verwendeten Steuersequenzen (Q1, Q2, Q3 usw.) werden von impulsförmigen Mustern abgeleitet, welche beispielsweise in Form von Tabellen in der Steuervorrichtung 5 gespeichert sind.

Für die Regelung des Ladestromes wird diegleiche Messwerterfassung für Strom und Spannung des Gleichstromkreises verwendet wie beim Fahren. Für die Steuerung des Ladevorganges werden Messdaten der vergangenen Entladezyklen (Fahrten) verwendet, wodurch der Ladevorgang auf eine maximale Lebensdauer des Akkumulators 1 optimiert werden kann. Zur Erfassung der Netzphase wird eine Spannungsmessung entweder in den Netz-Zuleitungen 10 oder am Sternpunkt 34 des Motors 3 vorgenommen.

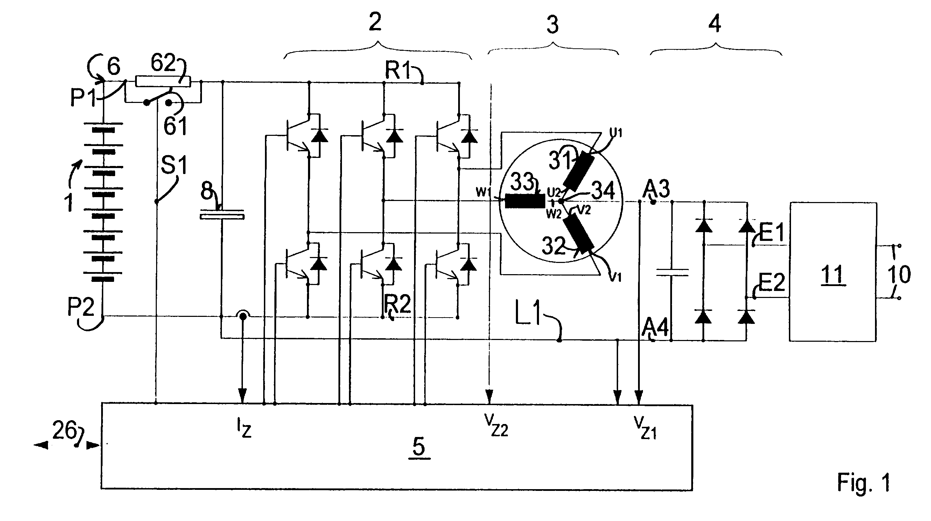

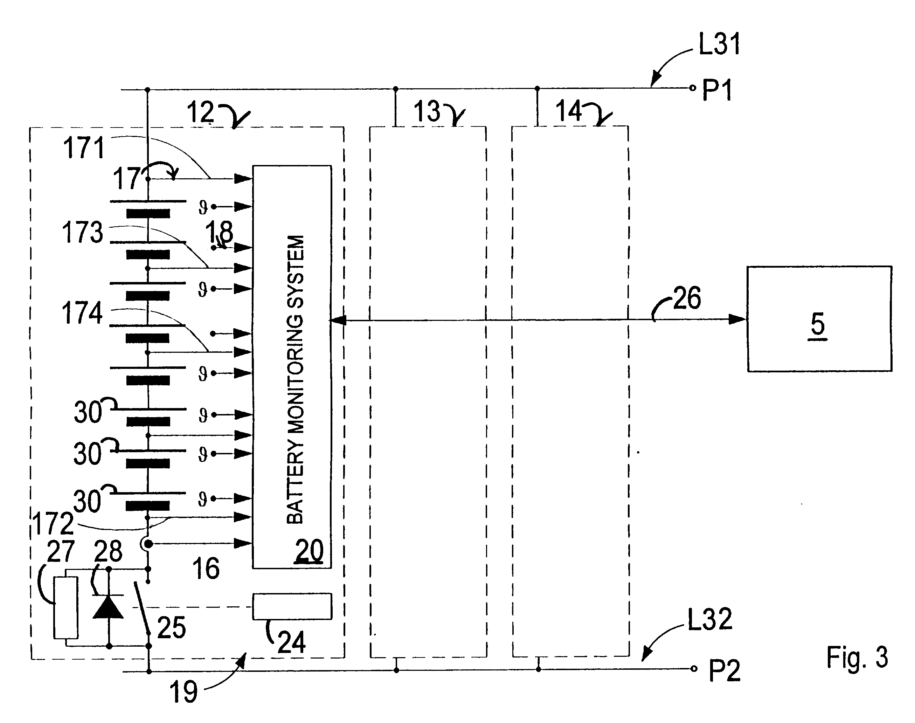

Vorstehend ist bereits erwähnt worden, dass verschiedene Verfahren zum Laden des Akkumulators 1 angewendet werden können. Eines dieser Verfahren kann vorteilhaft zum gleichzeitigen Laden mehrerer Akkumulatoren angewendet werden. Für die Durchführung dieses Verfahrens ist es allerdings zweckmässig, die in Fig. 1 dargestellte Schaltungsanordnung zu ergänzen. Diese ergänzende Schatungsanordnung ist in Fig. 3 gezeigt.

Der in Fig. 3 dargestellte Abschnitt der vorliegenden Schaltungsanordnung weist Anschlussplätze 12, 13 und 14 usw. auf, welche zur Aufnahme je eines Akkumulators 1 bestimmt und ausgebildet sind. Alle Anschlussplätze 12 bis 14 usw. sind im wesentlichen gleich ausgebildet. Es sind Leiter L31 und L32 vorgesehen, welche diese Arbeitsplätze 12 bis 14 untereinander parallel schalten. Ueber die Verbindungsleiter L31 und L32 ist der in Fig. 3 abgebildete Teil der vorliegenden Schaltungsanordnung an die Klemmen P1 und P2 jenes Teiles der vorliegenden Schaltungsanordnung bzw. Einrichtung angeschlossen, welcher in Fig. 1 dargestellt ist. In einem der Verbidungsleiter L31 ist der Vorladekreis 6 (Fig. 1) geschaltet.

Dem Akkumulator 1 im jeweiligen Anschlussplatz 12 bzw. 13 bzw. 14 usw. ist eine Vorrichtung 20 zur Ueberwachung sowie zur Steuerung des Ladevorganges des Akkumulators 1 zugeordnet. Diese Ueberwachungsvorrichtung 20 ermöglicht unter anderem, dass der Ladevorgang des Akkumulators 1 unter Berücksichtigung der am Akkumulator 1 festgestellten Parameter bzw. Grössen durchgeführt wird.

Der jeweilige Anschlussplatz kann auch eine Vorrichtung 16 zur Messung des Stromes durch den sich in diesem Anschlussplatz 12 bzw. 13 bzw. 14 befindlichen Akkumulator 1 enthalten. Dieser Strommesser 16 ist mit dem Akkumulator 1 in Serie geschaltet und sein Ausgang ist an einen der Eingänge der Ueberwachungsvor richtung 20 angeschlossen. Die Grösse des Stromes durch den Akkumulator 1 stellt eine der genannten Grössen dar, aufgrund welcher der Ladevorgang des Akkumulators 1 gesteuert wird.

Ferner kann der jeweilige Anschlussplatz 12, 13, 14 usw. Mittel zur Messung der Spannung am Akkumulator 1, an den einzelnen Zellen 30 desselben oder/und an Gruppen dieser Zellen 30 enthalten. Diese Mittel umfassen Anschlüsse 17, von welchen je einer einerends an die betreffende Stelle des Akkumulators 1 bzw. der Kette der diesen Akkumulator 1 bildenden Zellen 30 angeschlossen ist. Andernends ist der jeweilige Anschluss 17 an einen der Eingänge der Ueberwachungsvorrichtung 20 angeschlossen. In der Ueberwachungsvorrichtung 20 sind diesen Eingängen Mittel zur Messung der Spannung zwischen den jeweiligen Anschlüssen 17 zugeordnet. Ueber Zwischenanschlüsse, beispielsweise 173 und 174, wird die Spannung einer der Zellen 30 des Akkumulators 1 gemessen. Solche Zwischenanschlüsse können jedoch auch so angeordnet sein, dass sie Spannung an einer ganzen Gruppe von Zellen 30 erfassen. Die Zellen 30 dieser Gruppe sind in Serie geschaltet. Die Gesamtspannung des Akkumularors kann durch Addition der Teilspannungen an den Zellen bestimmt werden.

Der jeweiligen Zelle 30 bzw. Zellengruppe des Akkumulators 1 ist eine Thermosonde 18 zugeordnet, deren Ausgang an einen entsprechenden Eingang der Ueberwachungsvorrichtung 20 angeschlossen ist. Diese Sonden 18 messen Temperatur der Zellen 30 im Akkumulator 1.

Die Ueberwachungs- und Steuervorrichtung 20 ermittelt aufgrund der gemessenen Grössen den Ladezustand des betreffenden Akkumulators 1 bzw. der Zellen 30 desselben und sie überträgt diese Angaben über eine Datenleitung 26 an die Steuereinheit 5. Aufgrund dieser Ist-Werte steuert die Steuereinheit 5 über die Datenleitung 26 die Ladung des Akkumulators 1 so, dass dieser nicht überladen wird und dass dieser Akkumulator 1 während einer möglichst kurzen Zeit optimal geladen wird.

Es ist auch eine Vorrichtung 19 zum Abschalten des Akkumulators 1 vorgesehen. Diese Abschaltvorrichtung 19 enthält ein Relais 24, welches an einen der Ausgänge der Ueberwachungsvorrichtung 20 angeschlossen ist. Dieses Relais 24 hat einen Kontakt 25, welcher mit dem Akkumulator in Serie geschaltet ist. Die Stellung dieses Kontaktes 25 kann somit von der Steuereinheit 5 aus über die Ueberwachunsvorrichtung 20 und das Relais 24 gesteuert werden. Parallel zum Relaiskontakt 25 sind ein Widerstand 27 und eine Diode 28 geschaltet, welche den Relaiskontakt 25 überbrücken. Es versteht sich, dass die Diode und der Widerstand durch ein Halbleiterelement ersetzt werden können, welches dieselbe Funktion ausführt wie die Diode und der Widerstand in der angegebenen Schaltungsanordnung.

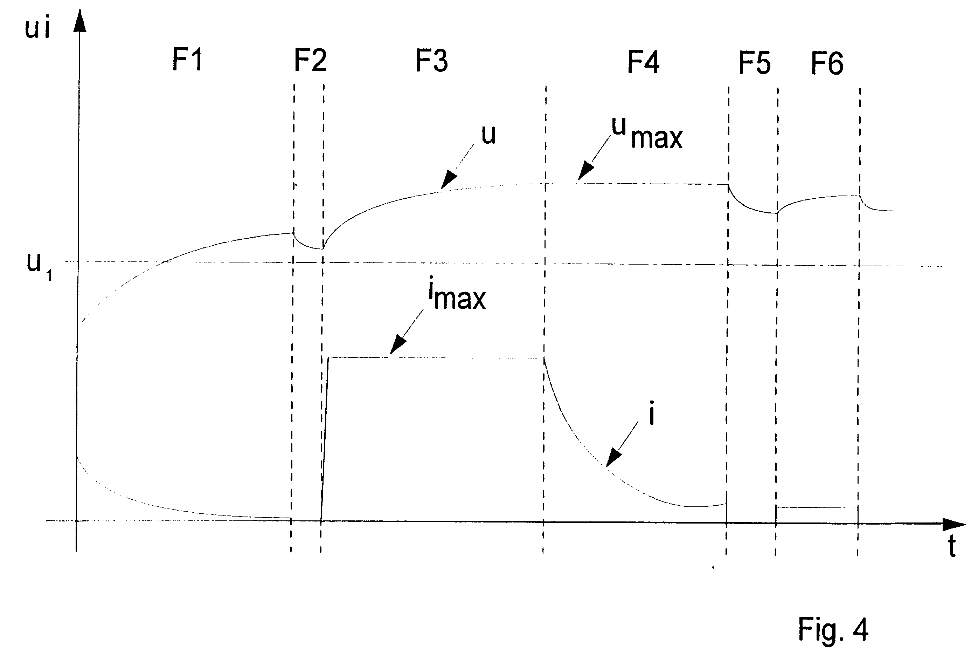

Der Verlauf des Ladevorganges, welchen der in Fig. 3 dargestellte Abschnitt der vorliegenden Schaltungsanordnung ermöglicht, kann in Abschnitte F1 bis F6 (Fig. 4) unterteilt werden. Wenn mehrere Akkumulatoren 1 an das Ladegerät angeschlossen sind (Fig. 3), dann sind die Kontakte 25 der Abschaltrelais 24 in der jeweiligen Anschlusstelle 12 usw. zunächst leitend. Falls die Spannung U des Akkumulators bzw. der Akkumulatoren 1 in den Anschlusstellen 12 usw. unterhalb des Scheitelwertes der Spannung im Netz 11 liegt (Phase F1 des Ladevorganges), wird der Kontakt 61 des Relais im Vorladekreis 6 geöffnet und der Ladestrom für die Akkumulatoren 1 wird durch den Vorladewiderstand 62 begrenzt. Durch den als Hochsteller geschalteten Wechselrichter 2 wird die Spannung zwischen den Klemmen P1 und P2 bzw. den Leitern R1 und R2 so weit erhöht, bis sich der gewünschte Ladestrom durch den Vorladewiderstand 62 einstellt. Diese Ladephase dauert nur so lange, bis die Spannung am Akkumulator bzw. an allen parallel geschalteten Akkumulatoren 1 über dem Scheitelwert der Spannung U1 im Netz 11 liegt.

Nachdem die Spannung U an den Akkumulatoren 1 den Scheitelwert U1 der Netzspannung überschritten hat, wird der Ladevorgang unterbrochen. Während dieser zweiten und stromlosen Phase F2 des Ladevorganges sinkt die Spannung U an den Akkumulatoren ein wenig. Der Kontakt 61 des Relais im Vorladekreis 6 wird leitend gemacht, sodass der Vorladewiderstand 62 kurzgeschlossen wird.

Danach beginnt die dritte Phase F3 des Ladevorganges, welche den Hauptladevorgang darstellt. Der Strom durch die Akkumulatoren 1 wird von der Steuereinheit 5 aus so geregelt, dass er konstant bleibt und seinen maximal zulässigen Wert Imax aufweist. Während diesem Hauptladevorgang wird etwa 80% der Energie in die Akkumulatoren 1 geladen. Die Spannung U an den Akkumulatoren 1 steigt während dieser Phase F3 kontinuierlich bis sie den Wert der maximal zulässigen Spannung Umax erreicht hat. Dieser Hauptladeabschnitt F3 wird beendet, nachdem die Spannung an den Akkumulatoren 1 ihren maximalen Wert Umax erreicht hat.

Ist die maximale zulässige Spannung Umax an den Akkumulatoren 1 erreicht, beginnt die vierte Phase F4 des Ladevorganges, während welcher die Akkumulatoren 1 bei konstanter und maximal zulässiger Spannung Umax geladen werden. Während dieses Folgeladeabschnittes F4 nimmt der Ladestrom I mit zunehmender innerer Spannung in den Akkumulatoren ab. Erst kurz vor dem Erreichen der Volladung des Akkumulators 1 kann der Ladestrom I wegen ansteigender Temperatur des Akkumulators 1 wieder zunehmen. Diese Stromzunahme wird als ein Kriterium für die Beendigung dieser vierten Ladephase F4 verwendet. Am Ende dieser Ladephase F4 wird der Ladestrom abgeschaltet.

Die parallele Verbindung zwischen bzw. unter den Akkumulatoren 1 der einzelnen Anschlussplätze 12 usw. wird nach der Beendigung des Folgeladeabschnittes F4 aufgehoben, indem die Kontakte 25 bei denjenigen Akkumulatoren 1 geöffnet werden, die den Zustand der Volladung erreicht haben. Der Ladezustand des jeweiligen Akkumulators 1 wird durch die diesem Akkumulator 1 zugeordnete Ueberwachungvorrichtung 20 ermittelt. Die genannte Oeffnung des Kontaktes 25 erfolgt stromlos, und zwar aufgrund von entsprechenden Befehlen aus der Steuereinheit 5 über die Datenleitung 26, nachdem der Ladestrom vorgängig abgeschaltet wurde. Sind die voll geladenen Akkumulatoren 1 vom Ladegerät mit Hilfe der Kontakte 25 getrennt, werden die noch nicht voll geladenen und über ihre Kontakte 25 an die Ladeleiter L31 und L32 weiterhin angeschlossenen Akkumulatoren 1 durch eine Wiederholung der Phasen F3 und F4 nachgeladen, bis auch sie den Zustand der Volladung erreicht haben.

Sind alle Akkumulatoren 1 voll geladen, wird der Ladestrom abgeschaltet und der Kontakt 25 auch bei den gerade nachgeladenen Akkumulatoren 1 wird geöffnet. Eine kurze Zeit F5 wird gewartet. Weil die Kontakte 25 der Abschaltrelais 24 bei den einzelnen Akkumulatoren 1 durch den Widerstand 27 und die Diode 28 überbrückt sind, können Ausgleichsströme durch den Widerstand 27 bzw. die Diode 28 zwischen und unter den Akkumulatoren 1 fliessen. Folglich können sich die Spannungen an den einzelnen und parallel geschalteten Akkumulatoren 1 durch die Widerstände 27 und die Dioden 28 ausgleichen, bis die Kontakte 25 der Abschaltrelais 24 geschlossen werden können, ohne dass ein hoher Umladungsstrom beim Schliessen der Kontakte 25 durch diese fliesst.

Durch das Schliessen der Kontakte 25 aller Akkumulatoren 1 sind wieder alle Akkumulatoren an das Ladegerät angeschlossen und es beginnt die letzte Ladephase F6. Während einer längeren Zeit wird der Ladevorgang mit einem kleinen Strom fortgesetzt. Die Stromstärke wird dabei so klein gewählt, dass die vollgeladenen Zellen 30 der Akkumulatoren 1 die nicht mehr speicherbare Energie ohne übermässige Erhitzung über ihre Oberfläche als Wärmeenergie abgeben können. Den Grad der Erhitzung der Zellen 30 bzw. der Akkumulatoren 1 überwachen die zugeordneten Thermosonden 18. Die am Anfang dieser Ladephase F6 noch nicht vollgeladenen Zellen 30 der Akkumulatoren 1 werden während dieser Phase F6 wegen der längeren Ladedauer vollständig geladen. Diese letzte Ladephase F6 muss nicht während jedem Ladevorgang durchgelaufen werden. Sie dient vor allem dazu, dass alle in Serie geschalteten Zellen 30 des jeweiligen Akkumulators 1 während des längeren Zeitraums hinweg denselben Ladezustand erreichen.

Der beschriebene Betrieb der Akkumulatoren 1 ergibt sich aus einer Zusammenarbeit zwischen der dem jeweiligen Akkumulator 1 zugeordneten Steuervorrichtung 20 und der Steuereinheit 5 dieser Einrichtung. Die Steuervorrichtung 20 wird über den Zustand des zugeordneten Akkumulators 1 durch Angaben informiert, welche von den Messvorrichtungen 16 bis 18 geliefert werden. Die Steuervorrichtung 20 liefert diese Zustandsangaben über die Datentverbindung 26 an die Steuereinheit 5 ab. Diese Steuereinheit 5 sendet ihre Befehle über die gleiche Datenverbindung 26 an die Steuervorrichtung 20, wobei diese Daten durch das in der Steuereinheit 5 abgearbeitete Programm modifiziert werden können.

In allen Ladephasen F1 bis F6 kann durch die Steuereinheit 5 erreicht werden, dass der maximal zulässige Netzstrom eingehalten wird und dass der Strom durch die parallel geschalteten Akkumulatoren-Stränge innerhalb der zulässigen Grenzen bleibt. Die zulässigen Grenzwerte der Akkumulatorspannung und des Ladestromes werden unter anderem aufgrund der an den Akkumulatoren 1 gemessenen Temperatur der Akkumulatorzellen 30 bestimmt.

Die Messgeräte, welche im Zusammenhang mit dem Anschlussplatz 12, 13 14 usw. vorstehend erwähnt sind, können sich im Inneren des im Anschlussplatz angeordneten Akkumulators 1 befinden. Diese Geräte können jedoch auch zur Periferie der vorliegenden Einrichtung gehören und sich ausserhalb des jeweiligen Akkumulators jedoch im Bereich des Anschlussplatzes befinden.

## Patentansprüche

1. Einrichtung zum Laden mindestens eines Akkumulators, insbesondere eines Akkumulators für ein elektrisch angetriebenes Fahrzeug, mit einem Drehstrommotor (3) sowie einem durch eine Steuereinheit (5) steuerbaren Pulswechselrichter (2), welcher zwischen dem Akkumulator (1) und dem Drehstrommotor (3) geschaltet ist, dadurch gekennzeichnet, dass Teile dieser Einrichtung, welche für den Betrieb des Fahrzeuges dienen, während des Ladevorganges verwendbar sind.

2. Einrichtung nach Patentanspruch 1, dadurch gekennzeichnet, dass der Drehstrommotor (3) in Stern geschaltete Wicklungen hat, dass ein Brückengleichrichter (4) zur Ladung des Akkumulators (1) aus einem Netz (10) vorgesehen ist, dass eine der Ausgangsklemmen (A3) des Brückengleichrichters (4) an den Sternpunkt (34) des Drehstrommotors (3) angeschlossen ist, dass der andere Ausgangspunkt (A4) des Brückengleichrichters (4) an einen der Pole (P2) des Akkumulators (1) angeschlossen ist, dass die Steuereinheit (5) zur Regelung des Ladestromes für den Akkumulator (1) ausgeführt und geschaltet ist und dass der Brückengleichrichter (4) 2- oder 3-phasig mit dem Netz (10) verbunden sein kann.

3. Einrichtung nach Patentanspruch 2, dadurch gekennzeichnet, dass die Steuervorichtung (5) so ausgeführt und an den Pulswechselrichter (2) sowie an den Motor (3) angeschlossen ist, dass sie die Betriebsart der Einrichtung bestimmen kann, und dass die Steuervorrichtung (5) einen Computer enthält, in welchem betreffende Programme ablaufen können.

4. Einrichtung nach Patentanspruch 2, dadurch gekennzeichnet, dass der andere bzw. obere Pol (P1) des Akkumulators (1) an einen Leiter (R1) angeschlossen ist, welcher die ersten bzw. oberen Enden von Brückenzweigen (21 bis 23) im Pulswechselrichter (2) untereinander verbindet, wobei die Wicklungen (W1,W2,W3) des Motors (3) über diese Brückenzweige (21 bis 23) an den Akkumulator (1) angeschlossen sind, dass ein zweiter Leiter (R2) vorgesehen ist, welcher die zweiten bzw. unteren Enden der Brückenzweige (21 bis 23) des Pulswechselrichters (2) untereinander verbindet und dass dieser zweite Verbindungsleiter (R2) an den zweiten bzw. unteren Pol (P2) des Akkumulators (1) angeschlossen ist.

5. Einrichtung nach Patentanspruch 4, dadurch gekennzeichnet, dass der obere Pol (P1 des Akkumulators (1) über einen Vorladekreis (6) an den ersten Verbindungsleiter (R1) angeschlossen ist, dass der Vorladekreis (6) ein Relais (61) sowie einen parallel zu den feststehenden Kontaktstücken des Vorladerelais (61) geschalteten Vorladewiderstand (62) umfasst und dass der Kontaktarm des Relais (61) von der Steuervorrichtung (5) aus über eine Steuerleitung (S1) betätigbar ist.

6. Einrichtung nach Patentanspruch 4, dadurch gekennzeichnet, dass ein Zwischenkreiskondensator (8) zwischen den Verbindungsleitern (R1,R2) und parallel zum Pulswechselrichter (2) geschaltet ist.

7. Einrichtung nach Patentanspruch 4, dadurch gekennzeichnet, dass der jeweilige Brückenzweig (21,22,23) des Pulswechselrichters (2) zwei Schalter (O,U) umfasst, welche über einen Verbindungsleiter (R3,R4,R5) in Serie geschaltet sind, dass jeder dieser Schalter (O,U) ein Transistor (TO,TU) und eine Diode (DO,DU) enthält, dass die Diode (DO,DU) dem Transistor (TO,TU) so zugeordnet, dass ihre Kathode mit dem Kollektor und ihre Anode mit dem Emitter des Transistors (TO,TU) verbunden ist, dass der Emitter des Transistors (TO) im oberen Schalter (O) mit dem Kollektor des Transistors (TU) im untereren Schalter (U) über einen der Verbindungsleiter (R3,R4,R5) verbunden ist, dass der Kollektor des Transistors (TO) im oberen Schalter (O) an den ersten Verbindungsleiter (R1) angeschlossen ist, dass der Emitter des Transistors (TU) im unteren Schalter (U) mit dem zweiten Verbindungsleiter (R2) verbunden ist und dass die Base des jeweiligen Transistors (TO,TU) über eine Steuerleitung (SO,SU) an die Steuervorrichtung (5) angeschlossen ist.

8. Einrichtung nach Patentanspruch 7, dadurch gekennzeichnet, dass der jeweilige Verbindungsleiter (R3,R4,R5) zwischen den Schaltern (O,U) der Brückenzweige (21,22,23) mit Hilfe je eines Leiters (L21,L22,L23) mit dem Anfang (V1,U1,W1) jeweils einer der Statorwicklungen (31,32,33) des Antriebsmotors (3) verbunden ist und dass die Enden (U2,V2,W2) der Statorwicklungen (31 bis 33) im Motor (3) untereinander verbunden sind, sodass sie den Sternpunkt (34) des Motors (3) bilden.

9. Einrichtung nach Patentanspruch 1, dadurch gekennzeichnet, dass im Akkumulator (1) so viele Zellen in Serie geschaltet sind, dass die Spannung des Akkumulators (1) während einer Hauptphase (F3 bis F6) der Ladung dieses Akkumulators über dem Scheitelwert der Spannung im Stromversorgungsnetz (10) liegt.

10. Einrichtung nach Patentanspruch 1, dadurch gekennzeichnet, dass eine Vorrichtung (17) zur Messung der Spannung am Akkumulator (1) und/oder an den Zellen (30) dieses Akkumulators und/oder an Gruppen der Akkumulatorzellen (30) vorgesehen ist, dass ferner Thermosonden (18) zur Messung der Temperatur des Akkumulators (1) und/oder seiner Zellen (30) aufweist, dass eine Vorichtung (5 bzw. 20) vorgesehen ist, welche zur Steuerung des Ladevorganges des Akkumulators (1) unter Berücksichtigung der am Akkumulator (1) unter anderem durch die genannten Messvorrichtungen (17,18) festgestellten Parameter dient und dass Ausgänge der genannten Messvorrichtungen an die Steuervorrichtung (20) angeschlossen sind, wobei diese Steuervorrichtung (20) mit der Steuereinheit (5) gekoppelt ist.

11. Einrichtung nach Patentanspruch 10, dadurch gekennzeichnet, dass Bestandteile des Wechselrichters zur Messung von Strom durch den Akkumulator und gegebenenfalls auch zur Messung der Spannung dienen.

12. Einrichtung nach Patentanspruch 10, dadurch gekennzeichnet, dass ein Anschlussplatz (12) für einen Akkumulator (1) vorgesehen ist, dass dieser Anschlussplatz neben den genannten Messvorrichtungen (17,18) auch eine Vorrichtung (16) zur Messung des Stromes durch den Akkumulator (1) aufweist,

13. Einrichtung nach Patentanspruch 12, mit zumindest zwei Anschlussplätzen, dadurch gekennzeichnet, dass die sich in den Anschlussplätzen (12,13,14) befindlichen Akkumulatoren (1) parallel nebeneinander geschaltet sind, dass im jeweiligen Ast dieser Anordnung eine Vorrichtung (19) zum Abschalten des sich in diesem Ast befindlichen Akkumulators (10) eingefügt ist und dass einer der Steuerausgänge der Steuervorrichtung (20) oder der Steuereinheit (5) dieses Astes (12,13,14) an die Abschaltvorrichtung (19) des sich in diesem Ast befindlichen Akkumulators (1) angeschlossen ist.

14. Verfahren zum Betrieb der Einrichtung nach Patentanspruch 1, dadurch gekennzeichnet, dass einer oder mehrere der unteren Schalter (U) des Pulswechselrichters (2) mit einem durch die Steuervorrichtung (5) erzeugten pulsweitmodulierten Signal angesteuert wird, damit ein magnetisches Feld in der bzw. in den als Speicherdrossel dienenden Statorwicklungen (31,32,33) des Drehstrommotors (3) aufgebaut wird, und dass der bzw. die unteren Schalter (U) gesperrt werden, damit sich das magnetische Feld über die Freilaufdioden (DO) in den oberen Schaltern (SO) und über den Akkumulator (1) wieder abbauen kann.

15. Verfahren nach Patentanspruch 14, dadurch gekennzeichnet, dass die Einschaltdauer der unteren Schalter (U) geändert wird, damit der Strom durch die Speicherdrosseln (31,32,33) und damit auch die Spannung über dem Akkumulator (1) geregelt werden kann.

16. Verfahren nach Patentanspruch 15, durch gekennzeichnet, dass der Mittelwert des Ladestromes durch den Akkumulator (1) entsprechend dem Ladegrad und der Spannung des Akkumulators (1) durch die Steuervorrichtung (5) geregelt wird.

17. Verfahren nach Patentanspruch 14, dadurch gekennzeichnet, dass ein oder mehrere der unteren Schalter (U) so getaktet werden, dass der Strom durch die Speicherdrosseln (31,32,33) die Form eines gleichgerichteten Sinussignals aufweist und dass dieser Strom mit der Netzspannung in gleicher Phase liegt.

18. Verfahren nach Patentanspruch 14, dadurch gekennzeichnet, dass die Ladung des Akkumulators aufgrund des beim Fahren gemessenen Verbrauches so optimiert wird, dass der Akkumulator jedesmal komplett geladen wird und dass gleichzeitig eine Ueberladung des Akkumulators vermieden wird.

19. Verfahren nach Patentanspruch 14, dadurch gekennzeichnet, dass zur Steuerung des Ladebetriebes jener Mikroprozessor ausgenützt wird, welcher beim Fahren für die Steuerung des Pulswechselrichters (2) verwendet wird, dass dieser Mikroprozessor die für die Regelung des Ladevorganges massgebenden Signale empfängt, diese verabeitet und daraus Signale zur Steuerung der Schalter (O,U) in den Brückenzweigen (21,22,23) des Pulswechselrichters (2) erzeugt und dass die dabei verwendeten Steuersequenzen (Q1,Q2,Q3 usw.) von impulsförmigen Mustern abgeleitet werden, welche z.B. in Form von Tabellen in der Steuereinheit (5) gespeichert sein können.

20. Verfahren nach Patentanspruch 14, dadurch gekennzeichnet, dass für die Regelung des Ladestromes diegleiche Messwerterfassung für Strom und Spannung des Gleichstromkreises verwendet wird wie beim Fahren, dass für die Steuerung des Ladevorganges Messdaten der vergangenen Entladezyklen (Fahrten) verwendet werden und dass zur Erfassung der Netzphase eine Spannungsmessung entweder in den Netz-Zuleitungen (10) oder am Sternpunkt (34) des Motors (3) vorgenommen wird.

21. Verfahren zum Betrieb der Einrichtung nach Patentanspruch 1, dadurch gekennzeichnet, dass der Ladevorgang einen Hauptabschnitt (F3) aufweist, während welchem konstanter Strom (Imax) durch den Akkumulator geführt wird und dass dieser Hauptladeabschnitt beendet wird, nachdem die Spannung des Akkumulators ihren maximalen Wert (Umax) erreicht hat.

22. Verfahren nach Patentanspruch 21, dadurch gekennzeichnet, dass das Laden während jenes Abschnitts (F4) des Ladevorganges, welcher auf den Hauptabschnitt (F3) des Ladevorganges folgt, bei konstanter Spannung (Umax) erfolgt, und dass dieser Folgeladeabschnitt (F4) beendet wird, wenn der Ladestrom (I) beginnt, wieder zuzunehmen oder wenn aufgrund anderer Messungen festgestellt wird, dass ein Akkumulator voll geladen ist.

23. Verfahren nach Patentanspruch 22, in welchem mehrere Akkumulatoren parallel geschaltet sind, dadurch gekennzeichnet, dass die Verbindung zu allen voll geladenen Akkumulatoren nach der Beendigung des Folgeladeabschnittes (F4) aufgehoben wird, und dass bei jenen Akkumulatoren, welche noch nicht voll geladen sind, der Folgeladeabschnitt (F4) fortgesetzt bzw. wiederholt wird, bis aufgrund der Messungen an diesen Akkumulatoren festgestellt wird, dass auch diese Akkumulatoren den vollen Ladezustand erreicht haben.

24. Verfahren nach Patentanspruch 23, dadurch gekennzeichnet, dass die voll geladenen Akkumulatoren wieder parallel geschaltet und mit einem Strom (I) geladen werden, welcher so klein ist, dass die voll geladenen Zellen (30) der Akkumulatoren (1) die nicht mehr speicherbare Energie ohne übermässige Erhitzung über ihre Oberfläche als Wärmeenergie abgeben können und dass die noch nicht voll geladenen Zellen durch diesen kleinen Strom über eine längere Zeitspanne hinweg voll geladen werden.

25. Verfahren nach Patentanspruch 21, dadurch gekennzeichnet, dass die zulässigen Grenzwerte der Akkumulatorspannung und des Ladestromes unter anderem aufgrund der an den Akkumulatoren gemessenen Temperatur bestimmt werden.
